# EUROPEAN PATENT SPECIFICATION

(11) **EP 0 758 842 B1**
(45) Date of publication and mention of the grant of the patent: **27.10.1999**
(21) Application number: 95909599.3
(22) Date of filing: 28.02.1995
(51) Int. Cl.: A01K 79/00, A01D 44/00, A01K 80/00, A23J 1/04, A23K 1/10

(54) **EUPHAUSIID HARVESTING METHOD AND APPARATUS**
VERFAHREN UND VORRICHTUNG ZUM ERNTEN VON EUPHAUSIDIEN
PROCEDE ET APPAREIL DE RECOLTE DES EUPHAUSIACES

(30) Priority: 28.02.1994 US 202593; 27.10.1994 CA 2134515
(43) Date of publication of application: 26.02.1997
(60) Divisional application: 99201094.2
(73) Proprietor: Biozyme Systems Inc., Vancouver, British Columbia V6Z 2R1 (CA)
(72) Inventor: SAXBY, David J., West Vancouver, British Columbia V7W 2J8 (CA); SPENCE, John A., West Vancouver, British Columbia V7V 4N2 (CA)
(74) Representative: Gilding, Martin John
(86) International application number: CA9500099
(87) International publication number: WO9522893

(56) References cited:
- EP-A- 0 467 003
- WO-A-92/02691
- DE-C- 342 675
- GB-A- 976 520
- GB-A- 1 225 469
- US-A- 3 466 782
- US-A- 4 399 629

## Description

### INTRODUCTION

This invention relates to a method and apparatus for harvesting zooplankton and, more particularly, to a method and apparatus for harvesting euphausiids for processing into a food products for human consumption such as for a carotenoid containing food product and/or into a feed products for animal consumption including aquaculture especially relating to juvenile fish culture.

### BACKGROUND OF THE INVENTION

With the advent of increasing activity in aquaculture or fish farming in the early to mid-1980s, research has been ongoing into increasing productivity or growth rate and reducing the mortality rate of fish raised in aquaculture conditions since survival of such fish is important. One such factor relates to enhancing the nutritional value and palatability of feed used in raising such fish. In addition to the nutritional value, it is desirable to reduce the cost of feed to such fish since, typically, the feed totals approximately 40 to 50% of the cost of raising the fish. Such feed should be a high quality feed to meet the objectives of having high nutritional value to maximize growth and to reduce fish mortality.

The requirement for feed products in aquaculture is projected to grow substantially and, as a result, there is and will be pressure to obtain the necessary ingredients for fish food. The possibility of using zooplankton and, in particular, euphausiids, as a fish feed, appetizer or food product has been investigated and has been found to be possible and desirable, particularly as a feed product. Euphausiids are a natural feed harvested directly from coastal waters and have a high nutritional value but, previously, the cost of harvesting and processing such zooplankton for a feed product has been prohibitively expensive.

As well, the questions of the availability of the biomass of such zooplankton, storage of the zooplankton and its harvesting and processing are parameters that must be investigated in order to determine whether the product would be appropriate as a feed product.

Through papers written by Fulton and other authors, the use of zooplankton as a food or feed product has been contemplated for some time. In particular, antarctic krill (Euphausia superba) for human consumption have been investigated, although relatively little work has been investigated related to aquaculture. The use of Euphausia pacifica in the coastal waters of British Columbia, Canada has been considered in relation to aquaculture only.

It appears, from those investigations, that the necessary biomass is available in coastal waters. Previously, euphausiids have been used as a pet food ingredient and some aquaculture operators have used euphausiids as a feed product. The euphausiids were used for such purposes in a frozen form after being harvested and in some cases, the euphausiids were freeze dried following harvesting. This is an expensive procedure.

Harvesting euphausiids from coastal waters was previously done utilizing a mid-water trawl. When the trawl net was full of euphausiids, the trawl net would be raised and the euphausiids would be stored on a shipboard location for subsequent freezing. In utilizing the mid-water trawl net, however, severe damage was caused to the euphausiids by being bunched in the cod end of the net. The euphausiids would end up being squashed and leaching action would occur when the net was raised which is believed to reduce the nutritional value of the euphausiids. To reduce this damage, only a certain weight of euphausiids were subsequently taken in each operation when raising the net in an attempt to reduce the handling damage. Nevertheless, a certain degree of damage still occurred and, of course, the time required to raise the net is a disadvantage because of the reduction of fishing time.

EP-A-0 467 003 discloses a trawling boat comprising a net of traditional type having a bag in its lower end and which is suitable for trawling. The boat is equipped with piping for sucking the catch out of the net into the boat. The piping is made up of modular pieces and its lower end has a suction mouth positioned at a point corresponding to the bag of the net. Suction means suck the catch through the piping and separation means are coupled to the upper end of the piping for separating the catch from water.

DE-C-342675 discloses a trawl net from which fish can be pumped via pipes connected to the rear of the net to a shipboard location.

GB-A-976 520 discloses a device for storing live fish including a suction conduit through which fish and water are pumped from the rear of a net to a container to hold the fish.

In processing feed products, it has typically been the case that the ingredients used in such feed products are heated to a high temperature around 100°C when the product is processed and dried. By heating the product to such a high temperature, it is believed that the enzymes and other proteins in the product are denatured. If, however, it is intended to utilize the product for early stage or juvenile aquaculture, which young fish have relatively undeveloped digestive systems, it is believed to be desirable that the euphausiids maintain a certain proportion of enzymes which will assist the digestive process in such larvae. If the theory that enzymes are advantageous in nutrition is correct, such destruction of the enzymes during the aforementioned drying process is disadvantageous.

It is also desirable to have a natural product, where the proteins are not denatured, available for early stage juvenile or larvae feed. In some previous products, exogenous enzymes have been added to the zooplankton mix. However, the addition of such enzymes is difficult to control and can result in a complete hydrolysis of the proteins to amino acids. The presence of free amino acids in the feed needs to be controlled since they can create an inferior product of substantially reduced value for a feed product.

It has been shown, surprisingly, that the degree of enzyme activity which results in determining the digestibility of a product, reaches a relatively constant value after a certain period of time in a natural product. Recent investigations conducted by the applicant have confirmed this characteristic for Euphausia pacifica. This characteristic was first discovered in relation to Euphausia superba by Kubota and Sakai in a report entitled "Autolysis of Antarctic Krill Protein and Its Inactivation by Combined Effects of Temperature and pH", Transactions of the Tokyo University of Fisheries, number 2, page 53-63, March 1978. However, the antarctic krill study done by Messrs. Kubota and Sakai had the objective of limiting enzyme activity which was deleterious to obtaining a food as opposed to a feed product. Messrs. Kubota and Sakai wished to inhibit the enzymatic activity by certain processing techniques which they considered desirable when the product was intended as a food product.

When a degree of stabilization in enzymatic activity has been obtained during the digestive process in the euphausiids, further processing may take place in order to make a useful product for commercial feed. Such processes may include adding acid to obtain an acid stabilized product or drying the product using a variety of drying techniques such as freeze drying, spray drying, or vacuum and air drying. Spray drying, as well as other drying processes, however, are done at temperatures that will permanently inactivate the enzymes in the euphausiids which, as earlier mentioned, is considered to be undesirable for aquaculture purposes although it is acceptable for purposes where the product is intended to be used as a carotenoid biopigment for coloring purposes in both feed and food products.

### SUMMARY OF THE INVENTION

According to one aspect of the invention there is provided a method of harvesting zooplankton comprising towing a trawl net behind a vessel in coastal waters through a location of zooplankton, said net having a configuration with an open forward end and a rearward cod end, to gather said zooplankton, said method comprising maintaining said open forward end of said net at a predetermined depth below the surface of said coastal waters where said zooplankton are located and characterised in that said method comprises maintaining said cod end of said net in an open condition with a cage positioned within said cod end of said net, providing an inlet at the most rearwardly positioned location of said cage and providing a pump for continuously removing said zooplankton gathered by said net from said cod end of said net via said inlet such that said zooplankton flow rearwardly through said net and cage and into said inlet for conveyance to a shipboard location.

According to a further aspect of the invention, there is provided apparatus for harvesting zooplankton from coastal waters comprising a trawl net having an open end and a rearward cod end, means to pull said trawl net behind a towing vessel, means to maintain said open end of said trawl net at a predetermined depth below the surface of said coastal waters characterised in that the apparatus further comprises a cage positioned within said cod end of said net to maintain said cod end of said net in an open configuration to gather said zooplankton, an inlet positioned at the most rearwardly positioned location of said cage, a hose connected to said inlet and extending to said surface of said coastal waters and a pump located on said surface of said coastal waters to pump said zooplankton to a shipboard location from said inlet through said hose, said zooplankton flowing rearwardly through said net and cage and into said inlet.

### BRIEF DESCRIPTION OF THE SEVERAL VIEWS OF THE DRAWINGS

Specific embodiments of the invention will now be described, by way of example only, with the use of drawings in which:
Figure 1A is a diagrammatic isometric view of a fishing vessel with an attached net which utilizes the euphausiid harvesting technique according to the invention;
Figure 1B is a diagrammatic front view of a net in an alternative harvesting technique according to the invention;
Figure 2A is a diagrammatic side view of a cage which is used to maintain the cod end of the fishing net illustrated in Figure 1 in an open position and which is further used to transport the harvested euphausiids to the harvesting vessel;
Figures 2B and 2C are side and rear views, respectively, of the dewatering trough used to remove water from the harvested euphausiids;

### DESCRIPTION OF SPECIFIC EMBODIMENT

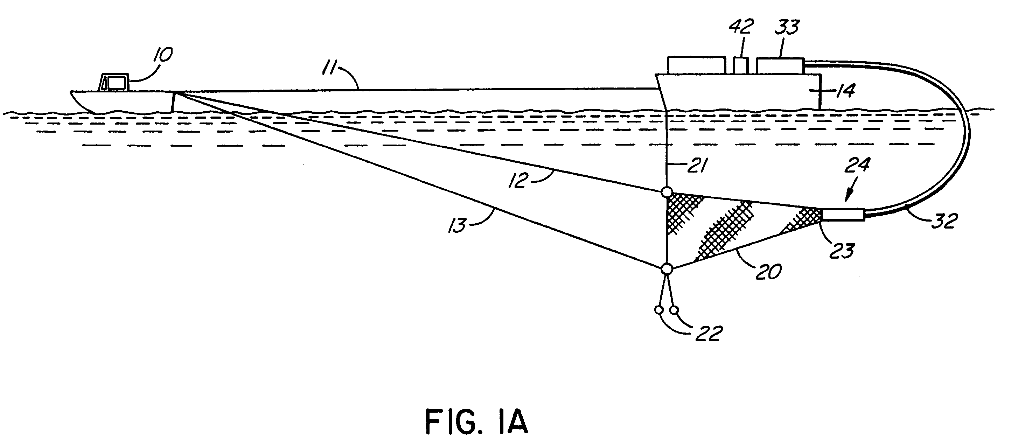

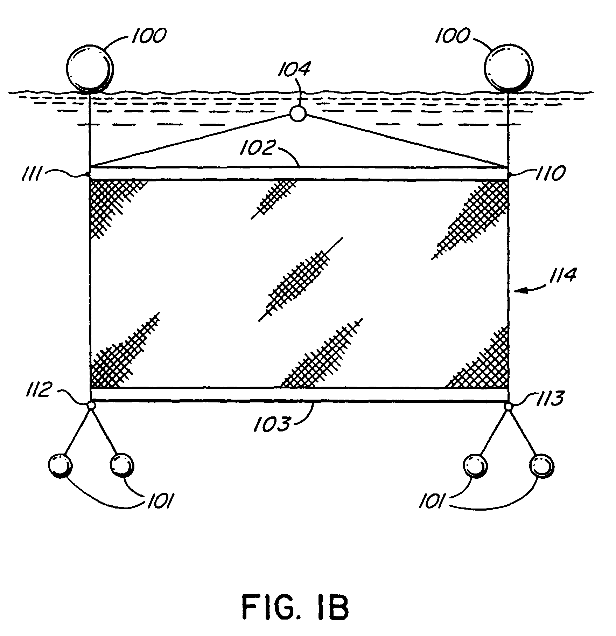

Referring now to the drawings, a towing vessel 10 is illustrated in Figure 1. A plurality of towing ropes 11, 12, 13 are connected to the towing vessel 10 in order to tow a barge 14 and a net 20. A plurality of ropes, 21 (only one of which is shown) are connected to the net 20 and extend downwardly from the barge 14. Weights 22 are connected to the bottom of the open forward facing portion of the net 20 in order to maintain the net 20 at a desired and predetermined depth where the concentration of zooplankton is satisfactory.

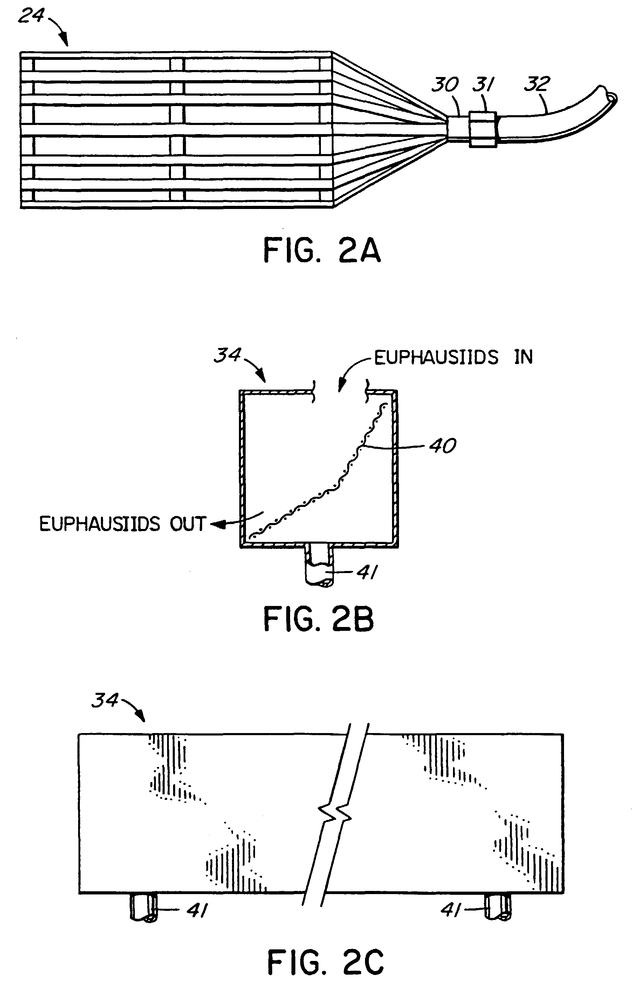

The cod or rearward end 23 of the net 20 is maintained in an open condition by the use of a cage generally illustrated at 24 in Figure 2. Cage 24 is of cylindrical configuration and is positioned within the cod end of net 20. It is made from aluminum and is preferably corrosion resistant. A fitting 30 is welded to the downstream end of the cage 24 and one end of a swivel connection 31 is joined to the fitting 30 to prevent fouling the net in the event components become unstable under adverse harvesting conditions. A hose 32 is connected to the other end of the connection 31.

Referring again to Figure 1, hose 32 extends upwardly from the cod end of the net 20 to the barge 14. A pump of a variety of configurations but, conveniently, a diaphragm sump pump 33, is located at the other end of the hose 32 on barge 14. A dewatering trough is generally shown at 34 and is illustrated in Figures 2B and 2C. Dewatering trough 34 has a lengthwise generally rectangular configuration and is also located on barge 14. Dewatering trough conveniently takes the configuration of a "lazy L". A set of screens 40 positioned at obtuse angles are utilised to allow water to drain from the pumped euphausiids and exit the trough 34 through drain pipes 41 while the euphausiids accumulate within the dewatering trough 34.

A blast freezer 42 was also located on the barge 14 to stabilize the harvested euphausiids. The blast freezer 42 subjects the euphausiids to a temperature of approximately +9° to -17°C and is used to freeze the dewatered euphausiids and stabilize the product for further processing. The euphausiids accumulate within the dewatering trough 34 and which are periodically removed from the trough 34 from time to time for freezing. Thereafter, the frozen euphausiids are transported to a processing location and processed as described hereafter.

In prototype demonstrations, the net 20 utilised for the harvesting operation was a specially designed 3.97 m (13 ft) by 6.41 m (21 ft) plankton net suspended from a 14.03 m (46 ft) aluminum barge. The pumping action was by a 7.6 cm (three inch) diaphragm pump located on the barge 14 and the freezing action occurred within a minus seventeen (-17°C) degree centigrade, blast freezer 42.

As earlier described, the frozen euphausiids are transported to a processing location in order to transform the euphausiids into the desired feed product.

A further harvesting technique is contemplated in Figure 1B. In this technique, weights 101 are connected to the mouth end of the net generally illustrated at 114 at the ends of the lower horizontal beam 103. Floats 100 are connected to the top horizontal beam 102 of the mouth end of the net 114. Depending on the size of the net 114, lines are connected on one end to attachment points 104, in the first instance or, alternatively, to points 110, 111, 112, 113 and, on the other end, to the towing vessel. The net 114 is pulled through the water gathering the zooplankton which enter the net 114 through the mouth.

Other applications for the hydrolysed krill product are also contemplated. Fish under stress, which is common with cultivated species raised with aquacultural techniques, are reluctant to eat and, accordingly, therapeutic drug delivery and special diets used for such marine species are difficult to use because the fish do not find such products palatable. The hydrolysed krill and other zooplankton product according to the invention, may be used with such special diets and drug delivery by creating an enhanced flavour when the medicinal product such as a pellet is coated or mixed with the hydrolysed zooplankton product in a liquid or paste form. Likewise, while other such products may include specially added amino acids and other compounds to enhance the flavour of the product, the hydrolysed krill preserves and enhances the level of certain free amino acids and other flavourants thereby allowing flavour enhancement with a natural product and without the addition of amino acids or other flavourants. Likewise, the krill retain the original pigments and fatty acids. The activity of the enzymes, which are contained in the krill, is also retained in the hydrolysed natural product. Such enzymes allow for enhanced digestion by cultivated marine species by increasing the availability of peptides and free amino acids without creating additional harmful stress on such species.

Yet a further application is the use of hydrolysed krill in association with plant or vegetable protein such as soymeal and canola in fish feed mixtures. Such an application would increase the digestibility of the plant protein which inherently and by itself has relatively low digestibility and palatability. This is so because the enzymes in the hydrolysed krill products according to the invention are preserved by the hydrolysis and act on the plant proteins. The enhanced digestibility of a product combination of plant protein and hydrolysed krill is also contemplated to reduce the fecal load in the environment by fish fed with such combination. This can be an important feature with cultivated marine and freshwater species. Likewise, the palatability of such non-fish meal proteins, in particular, plant proteins such as canola or soy meal, is enhanced.

Experiments conducted to date utilize the enzymes in krill to carry out a limited hydrolysis of canola and other plant proteins. For example, one part of dry canola or soy meal which has added ten percent (10%) wheat bran is blended with five (5) parts of hydrolysed krill. The hydrolysate is pumped from the digester to the feed stock hopper and the dry blend is added. The mixture is brought to the desired temperature and agitated in the digester for approximately one (l) hour. Measurements of phytic acid and the levels of the amino acids and ammonia are then taken. For example, 250 lbs. of krill is hydrolysed by bringing the krill to approximately 45° Celsius. The temperature is held for one (1) hour and is then blended with 5 lbs. of wheat bran with 45 lbs. of canola concentrate. The use of wheat bran is necessary to provide phytose, an enzyme which is absent in canola meal and krill. The phytic acid is dephosphoiyloted by phytose from the wheat bran. The phytic acid is acted on by the enzymes. It is noted that the blend may be retained in the digester for an extended period, up to a period of four (4) hours or even longer.

While specific embodiments of the invention have been described, such description should be taken as illustrative of the invention only and not as limiting its scope as defined in accordance with the accompanying claims.

## Claims

1. A method of harvesting zooplankton wherein a trawl net (20) is towed behind a vessel (10) in coastal waters through a location of zooplankton, said net (20) having a configuration with an open forward end and a rearward cod end (23) to gather said zooplankton, said method comprising maintaining said open forward end of said net (20) at a predetermined depth below the surface of said coastal waters where said zooplankton are located, and characterised in that said method comprises maintaining said cod end (23) of said net (20) in an open condition with a cage (24) positioned within said cod end (23) of said net (20), providing an inlet (30) at the most rearwardly positioned location of said cage (24) and providing a pump (33) for continuously removing said zooplankton gathered by said net (20) from said cod end (23) of said net (20) via said inlet (30), such that said zooplankton flow rearwardly through said net (20) and cage (24) and into said inlet (30) for conveyance to a shipboard location.

2. A method as in claim 1 and further comprising dewatering said zooplankton at said shipboard location.

3. A method as in claim 2 and further comprising freezing said dewatered zooplankton.

4. A method as in claim 1 wherein said zooplankton are euphausiids.

5. Apparatus for harvesting zooplankton from coastal waters comprising a trawl net (20) having an open end and a rearward cod end (23), means (11,12,13,14) to pull said net (20) behind a towing vessel (10), means (14,100,101) to maintain said open end of said trawl net (20) at a predetermined depth below the surface of said coastal waters, characterised in that the apparatus further comprises a cage (24) positioned within said cod end (23) of said net (20) to maintain said cod end (23) of said net (20) in an open condition to gather said zooplankton, an inlet (30) positioned at the most rearwardly positioned location of said cage (24), a hose (32) connected to said inlet (30) and extending to said surface of said coastal waters and a pump (33) located on said surface of said coastal waters to pump said zooplankton to a shipboard location (14) from said inlet (30) through said hose (32), said zooplankton flowing rearwardly through said net (20) and cage (24) and into said inlet (30).

6. Apparatus as in claim 5 wherein said pump (33) is a diaphragm pump.

7. Apparatus as in claim 6 and further comprising means (34) to dewater said zooplankton.

8. Apparatus as in claim 7 and further comprising means (42) to freeze said zooplankton.

9. Apparatus as in claim 5 wherein said zooplankton are euphausiids.

## Patentansprüche

1. Verfahren zum Ernten von Zooplankton, wobei ein Schleppnetz (20) hinter einem Fahrzeug (10) im Küstengewässer durch eine Stelle mit Zooplankton geschleppt wird, wobei das Netz (20) mit einem offenen vorderen Ende und einem rückwärtigen Kernende (23) ausgestaltet ist, um das Zooplankton zu sammeln, wobei das Verfahren das Halten des offenen vorderen Endes des Netzes (20) in einer vorbestimmten Tiefe unterhalb der Oberfläche des Küstengewässers, wo sich das Zooplankton befindet, umfaßt und **dadurch gekennzeichnet** ist, daß das Verfahren umfaßt:
Halten des Kernendes (23) des Netzes (20) in einem offenen Zustand mit einem Käfig (24), der innerhalb des Kernendes (23) des Netzes (20) angeordnet ist, Vorsehen eines Einlasses (30) an der zuhinterst angeordneten Stelle des Käfigs (24), und Vorsehen einer Pumpe (33) zum kontinuierlichen Entfernen des vom Netz (20) gesammelten Zooplanktons vom Kernende (23) des Netzes (20) über den Einlaß (30), derart, daß das Zooplankton nach hinten durch das Netz (20) und den Käfig (24) hindurch und in den Einlaß (30) strömt, um zu einer an Bord des Schiffes gelegenen Stelle gefördert zu werden.

2. Verfahren nach Anspruch 1, das ferner das Entwässern des Zooplanktons an der an Bord des Schiffes gelegenen Stelle umfaßt.

3. Verfahren nach Anspruch 2, das ferner das Abkühlen bzw. Einfrieren des entwässerten Zooplanktons umfaßt.

4. Verfahren nach Anspruch 1, wobei das Zooplankton Euphausidien sind.

5. Vorrichtung zum Ernten von Zooplankton aus Küstengewässern, umfassend ein Schleppnetz (20) mit einem offenen Ende und einem hinteren Kernende (23), eine Einrichtung (11, 12, 13, 14) zum Ziehen des Netzes (20) hinter einem Schleppfahrzeug (10), eine Einrichtung (14, 100, 101) zum Halten des offenen Endes des Schleppnetzes (20) in einer vorbestimmten Tiefe unterhalb der Oberfläche des Küstengewässers, **dadurch gekennzeichnet**, daß die Vorrichtung ferner einen Käfig (24) umfaßt, der innerhalb des Kernendes (23) des Netzes (20) angeordnet ist, um das Kernende (23) des Netzes (20) in einem offenen Zustand zu halten, um das Zooplankton zu sammeln, einen Einlaß (30), der an der zuhinterst angeordneten Stelle des Käfigs (24) angeordnet ist, einen Schlauch (32), der mit dem Einlaß (30) verbunden ist und sich zur Oberfläche des Küstengewässers hin erstreckt, und eine Pumpe (33), die an der Oberfläche des Küstengewässers angeordnet ist, um das Zooplankton vom Einlaß (30) durch den Schlauch (32) hindurch zu einer an Bord des Schiffes gelegenen Stelle (14) zu pumpen, wobei das Zooplankton nach hinten durch das Netz (20) und den Käfig (24) hindurch und in den Einlaß (30) strömt.

6. Vorrichtung nach Anspruch 5, wobei die Pumpe (33) eine Membranpumpe ist.

7. Vorrichtung nach Anspruch 6, die ferner eine Einrichtung (34) zum Entwässern des Zooplanktons umfaßt.

8. Vorrichtung nach Anspruch 7, die ferner eine Einrichtung (42) zum Abkühlen bzw. Einfrieren des Zooplanktons umfaßt.

9. Vorrichtung nach Anspruch 5, wobi das Zooplankton Euphausidien sind.

## Revendications

1. Un procédé de récolte de zooplancton, dans lequel un filet de chalutage (20) est remorqué derrière un navire (10) dans des eaux côtières, sur un site de zooplancton (20), ledit filet (20) ayant une configuration dotée d'une extrémité avant ouverte et d'une extrémité en cocon arrière (23) pour capter ledit zooplancton, ledit procédé comprenant le maintien d'une extrémité avant ouverte dudit filet (20) a une profondeur prédéterminée sous la surface desdites eaux côtières, à l'emplacement auquel ledit zooplancton se trouve, caractérisé en ce que le procédé comprend le maintien de ladite extrémité en cocon (23) dudit filet (20) en une position ouverte, une cage (24) tampositionnée à l'intérieure de ladite extrémité en cocon (23) dudit filet (20), fournissant une entrée (30) à l'emplacement le plus à l'arrière de ladite cage (24) et fournissant une pompe (33) pour éliminer en continue ledit zooplancton capté par ledit filet (20) depuis ladite extrémité en cocon (23) dudit filet (20) via ladite entrée (30), de manière que ledit zooplancton s'écoule vers l'arrière en passant à travers ledit filet (20) et la cage (24) et dans ladite entrée (30) pour être transporté à bord du navire.

2. Procédé selon la revendication 1, comprenant en outre le séchage dudit zooplancton, sur le site à bord.

3. Procédé selon la revendication 2, et comprenant en outre la congélation dudit zooplancton séché.

4. Procédé selon la revendication 1, dans lequel ledit zooplancton est des euphausiacés.

5. Appareil de récolte de zooplancton depuis des eaux côtières, comprenant un filet de chalutage (20) ayant une extrémité ouverte et une extrémité en cocon arrière (23), des moyens (11, 12, 13, 14) pour tirer ledit filet (20) derrière un navire de remorquage (10), des moyens (14, 100, 101) pour maintenir ladite extrémité ouverte dudit filet de remorquage (20) à une profondeur prédéterminée au dessous de la surface desdites eaux côtières, caractérisé en ce que l'appareil comprend en outre une cage (24) positionnée à l'intérieur de ladite extrémité en cocon (23) dudit filet (20), pour maintenir ladite extrémité en cocon (23) dudit filet (20) en un état ouvert afin de capter ledit zooplancton, une entrée (30) positionnée à l'emplacement le plus à l'arrière de ladite cage (24), un tuyau (32) connecté à ladite entrée (30) et s'étendant vers ladite surface desdites eaux côtières et une pompe (33) placée à ladite surface desdites eaux côtières pour pomper ledit zooplancton en un emplacement à bord (14) à partir de ladite entrée (30) en passant par ledit tuyau (32), ledit zooplancton s'écoulant vers l'arrière en passant à travers ledit filet (20) et la cage (34) et dans ladite entrée (30).

6. Appareil selon la revendication 5, dans lequel ladite pompe (33) est une pompe à diaphragme.

7. Appareil selon la revendication 6, comprenant en outre des moyens (34) pour sécher ledit zooplancton.

8. Appareil selon la revendication 7, et comprenant en outre des moyens (42) pour congeler ledit zooplancton.

9. Appareil selon la revendication 5, dans lequel ledit zooplancton est des euphausiacés.
